# EUROPEAN PATENT SPECIFICATION

(11) **EP 4 641 126 B1**
(45) Date of publication and mention of the grant of the patent: **07.10.2026**
(21) Application number: 25169824.7
(22) Date of filing: 10.04.2025
(51) Int. Cl.: F28D 7/00

(54) **SYSTEM FOR COOLING HEAT-TREATED LIQUID FOOD**
SYSTEM ZUM KÜHLEN WÄRMEBEHANDELTER FLÜSSIGER LEBENSMITTEL
SYSTÈME DE REFROIDISSEMENT D'ALIMENTS LIQUIDES TRAITÉS THERMIQUEMENT

(30) Priority: 23.04.2024 EP 24171969
(43) Date of publication of application: 29.10.2025
(73) Proprietor: Tetra Laval Holdings & Finance S.A., 1009 Pully (CH)
(72) Inventor: Arlov, Dragana, 221 86 Lund (SE); Vestberg, Staffan, 221 86 Lund (SE)
(74) Representative: Tetra Pak Patent Attorneys

(56) References cited:
- EP-A1- 3 332 653
- WO-A1-2018/115131
- JP-A- 2001 241 883
- US-A- 4 160 002
- US-A- 4 310 476

## Description

### Technical Field

The present disclosure relates to a system for cooling heat-treated liquid food as defined in the preamble of claim 1, and as illustrated in US 4 160 002 A.

### Background Art

Heat treatment of liquid food serves a vital role in regards of e.g. food safety and shelf life when producing a wide range of liquid food in the dairy industry. To this end, various types of heat-treatment systems are commonly used for heat treatment of liquid food in the dairy industry. One type of system for heat-treatment of liquid food is ultra-high temperature (UHT) systems. Such systems are typically used for sterilizing liquid food as well as making the liquid food ready for distribution in an efficient but also safe way. UHT systems also ensure that food safety requirements are adhered to.

After the actual heat-treatment in a UHT system the liquid food is cooled. One way of rapidly cooling heat-treated liquid food is to introduce the heated liquid food into a flash vessel, where the liquid food undergoes a rapid decrease in pressure and hence a rapid decrease in temperature. At the same time, water is typically expelled from the liquid food in form of steam which leaves the flash vessel. The steam leaving the flash vessel is typically condensed in some form of condenser to e.g. recover heat. In order to efficiently utilize the capacity of the condenser, it is important to spread out the steam throughout the condenser. To this end, various designs and arrangements for spreading out the steam throughout the condenser have been suggested. However, such designs and arrangements are prone to accumulate proteins and other solid materials form the liquid food which are carried over to the condenser by the steam. Accumulation of proteins and other solid materials may hamper the efficiency of the condenser. The arrangements therefore needs to be periodically cleaned, which takes significant time and causes standstill of production. It is desirable to reduce the need for cleaning.

### Summary

It is an objective to at least partly overcome one or more of the above-identified limitations of the prior art.

One such objective is to provide a system for cooling heat-treated liquid food.

Another objective is to provide such a system that requires less downtime for cleaning.

One or more of these objectives, as well as further objectives that may appear from the description below, are at least partly achieved by a system for cooling heat-treated liquid food, and a method of cooling heat-treated liquid food according to the independent claims, embodiments thereof being defined by the dependent claims.

A first aspect relates to a system for cooling heat-treated liquid food. The system comprises a flash vessel and a condenser. The flash vessel is configured to receive, and flash evaporate the heat-treated liquid food to form a gaseous flow of steam and a liquid stream of the liquid food product. The condenser is arranged downstream the flash vessel. The condenser is configured to receive the gaseous flow of steam from the flash vessel, and to condensate a major portion of the gaseous flow of steam to form a condensate. An inlet of the condenser is provided with a distribution plate configured to distribute the gaseous flow of steam over an inlet area of the condenser. The distribution plate comprises a plurality of distribution openings extending between an inlet surface and an outlet surface of the distribution plate. A majority of the plurality of distribution openings comprises a respective inlet section which tapers as seen from the inlet surface towards the outlet surface.

Hereby an improved system for cooling heat-treated liquid food is provided.

The system for cooling heat-treated liquid food is designed for and hence suitable for cooling heat-treated liquid food in general.

Further, the system for cooling heat-treated liquid food is advantageous in that the system requires less downtime for cleaning. Surprisingly, the present inventor has found that by optimizing the distribution openings of the distribution plate, less proteins carried from the heat-treated liquid food in the gaseous flow of steam may accumulate on the distribution plate, thus leading to less fouling of the distribution plate. More specifically, the present inventors have after significant experimentation found that less fouling will occur on the distribution plate by letting a majority of the plurality of distribution openings comprise a respective inlet section which tapers as seen from the inlet surface towards the outlet surface of the distribution plate.

Thus, a majority of the distribution openings have a section thereof which tapers from an inlet surface of the distribution plate towards an outlet surface of the distribution plate. In other words, a majority of the distribution openings tapers from an inlet surface of the distribution plate towards an outlet side of the distribution plate.

However, in practice, the present inventors have found that less fouling may occur on the distribution plate by letting all of the plurality of distribution openings comprise a respective inlet section which tapers as seen from the inlet surface towards the outlet surface of the distribution plate.

By "tapers" is meant that a cross sectional area of the inlet section becomes smaller at an increased distance from the inlet surface of the distribution plate towards the outlet surface of the distribution plate. Thus, the cross section of the inlet section is largest at the inlet surface. Correspondingly, the cross section of the inlet section is smallest at the end of the inlet section, i.e. farthest away from the inlet surface. Further, the inlet section may taper in a liner fashion, such that the inlet section resembles a frustoconical volume. The inlet section may taper in a non-liner way. The inlet section may for instance have a convex or concave bounding surface defining the inlet section.

In some embodiments, a maximum cross sectional area of the inlet section may be at least 1,25 times a minimum cross sectional area of the inlet section. In some embodiments, a maximum cross sectional area of the inlet section may be at least 2 to 8 times a minimum cross sectional area of the inlet section.

In some embodiments, said majority of the plurality of distribution openings may comprise a respective outlet section of a uniform cross section, the outlet section adjoining the inlet section. Thus, the tapering inlet section may directly proceed into an outlet section of a uniform cross section.

By "uniform cross section" is meant that the cross section does not change at a varying distance from the inlet surface of the distribution plate. Thus, the uniform cross will have the same size and shape at a varying distance from the inlet surface of the distribution plate.

In some embodiments, said majority of the plurality of distribution openings may comprise an outlet section which expands as seen from the inlet surface towards the outlet surface. In other words, a majority of the distribution openings expand from a location within the respective opening towards the outlet surface of the distribution plate.

By "expands" is meant that a cross sectional area of the outlet section becomes lager at an increased distance from the inlet surface of the distribution plate towards the outlet surface of the distribution plate. Thus, the cross section of the outlet section is largest at the outlet surface. Correspondingly, the cross section of the outlet section is smallest at the beginning of the inlet section, i.e. closest the inlet surface. Further, the outlet section may expand in a liner fashion, such that the outlet section resembles a frustoconical volume. The outlet section may expand in a non-liner way. The outlet section may for instance have a convex or concave bounding surface defining the outlet section.

In some embodiments, all distribution openings may comprise an outlet section which expands as seen from the inlet surface towards the outlet surface.

In some embodiments, the inlet section may adjoin the outlet section. Thus, the outlet section may follow directly after the inlet section as seen from the inlet surface towards the outlet surface.

In some embodiments, the inlet section and the outlet section may be joined via an intermediate section of a uniform cross section.

In some embodiments, said plurality of distribution openings may be circular openings, and wherein each inlet section may be formed by a countersunk inlet section. Thus, the inlet section of such a circular distribution opening may be formed by expanding or enlarging a portion of the circular distribution opening from the inlet surface of the distribution plate. Such expanding or enlarging may typically be done by chamfering a circular opening from the inlet surface. In this way the inlet section may taper in a liner fashion or in a non-liner fashion depending on the shape of the tool used for the countersinking.

In some embodiments, all distribution openings may be circular openings, and wherein each inlet section may be formed by a countersunk inlet section.

In some embodiments, each countersunk inlet section may overlap one or more countersunk inlet sections of neighboring distribution openings. In this way, distribution openings with a tapering inlet section may be provided also for distribution openings which are located close to each other. Further, the present inventor has found that the flow of the gaseous flow of steam may become less prone to fouling the distribution openings when overlapping countersunk inlet sections of neighboring distribution openings are used.

In some embodiments, each countersunk outlet section may overlap one or more countersunk outlet sections of neighboring distribution openings.

In some embodiments, the countersunk inlet section may meet the countersunk outlet section such that said plurality of distribution openings are defined by a respective pair of communicating frustoconical volumes.

In some embodiments, a minimum cross-sectional area of each one of the plurality of distribution openings may lie in a range of 3-80 mm², preferably in a range of 12-50 mm², which is advantageous in that an efficient distribution of the gaseous flow of steam over the inlet area of the condenser may be achieved.

In some embodiments, a minimum cross-sectional area of each one of all distribution openings may lie in a range of 3-80 mm², preferably in a range of 12-50 mm².

In some embodiments, a total cross-sectional area of the plurality of distribution openings may correspond to 50-80%, preferably 55-75%, more preferably 62-67%, of a cross-sectional area of the inlet surface. which is advantageous in that an adequate pressure drop and hence an efficient distribution of the gaseous flow of steam over the inlet area of the condenser may be achieved.

In some embodiments, said majority of the plurality of distribution openings may be defined by a respective bounding surface in the shape of a hyperboloid of one sheet.

In some embodiments, all distribution openings may be defined by a respective bounding surface in the shape of a hyperboloid of one sheet.

In some embodiments, the distribution plate may comprise 100 - 6000 number of distribution openings, preferably 250 to 5000 number of distribution openings, and wherein the tube heat exchanger may comprise 10 to 600 number of tubes, preferably 40 to 460 numbers of tubes.

A second aspect relates to a method of cooling heat-treated liquid food. The method comprises: flash evaporating, at a flash vessel, the heat-treated liquid food to form a gaseous flow of steam and a liquid stream of the liquid food product. The method comprises: receiving, at an inlet of a condenser arranged downstream the flash vessel and being configured to condensate a major portion of the gaseous flow of steam to form a condensate, the gaseous flow of steam from the flash vessel. The method comprises: distributing, by a distribution plate provided at the inlet of the condenser, the gaseous flow of steam over an inlet area of the condenser. The distribution plate comprises a plurality of distribution openings extending between an inlet surface and an outlet surface thereof. A majority of the plurality of distribution openings comprises an inlet section which tapers as seen from the inlet surface towards the outlet surface.

In general, features of this aspect provide similar advantages as discussed above in relation to the first aspect. Consequently, said advantages will not be repeated in order to avoid undue repetition.

Still other objectives, embodiments, and aspects, as well as additional features and advantages will appear from the following detailed description as well as from the accompanying schematic drawings.

### Brief Description of the Drawings

Embodiments of the invention will now be described, by way of example, with reference to the accompanying schematic drawings, in which
Fig. 1 is a schematic view of a system for heat treatment of liquid food including a system for cooling of said heat-treated liquid food.
Fig. 2 is a schematic cross-sectional view of a condenser of the system of Fig. 1.
Fig. 3 is a schematic perspective view of a distribution plate of the condenser of Fig. 2.
Fig. 4a is a schematic cross-sectional view of distribution openings of a distribution plate according to prior art.
Figs. 4b-4f are schematic cross-sectional views of embodiments of distribution openings of a distribution plate.
Fig. 4g is a schematic top view illustrating overlapping sections of distribution openings of a distribution plate.
Fig. 5 is a flow chart illustrating a method of cooling heat-treated liquid food.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

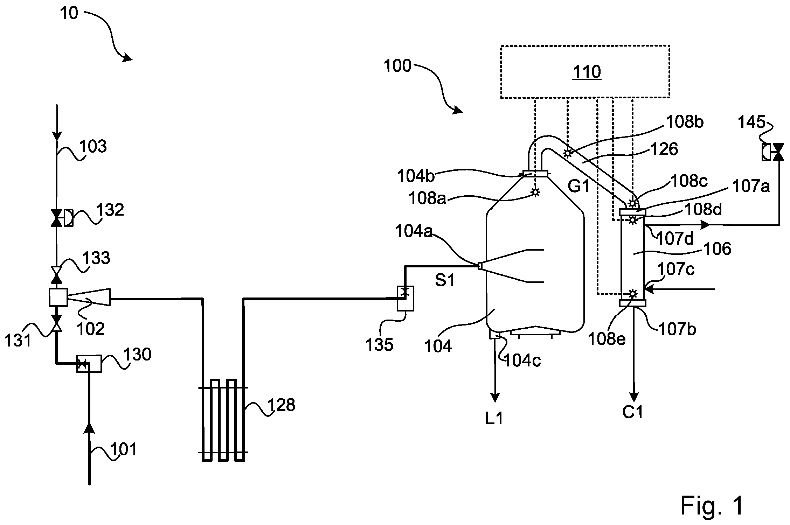

Fig. 1 is a schematic overview of an example system 10 for heat-treatment of a liquid food or a liquid food product. The system 10 includes a system 100 for colling the heat-treated liquid food.

The system, 10 may be used for heat-treatment of any type of liquid food. The system 10 is preferably an ultra-high temperature (UHT) system. In the following, the system 10 will be described as a UHT system for reasons of clarity and conciseness.

The system 10 is illustrated in a simplified manner in which parts relevant for understanding how to perform heat-treatment of milk and subsequent colling of the heat-treated milk are integrated in the system 10. Hence, it is to be understood that the system 10 typically comprises further parts or elements not shown or described in the following disclosure.

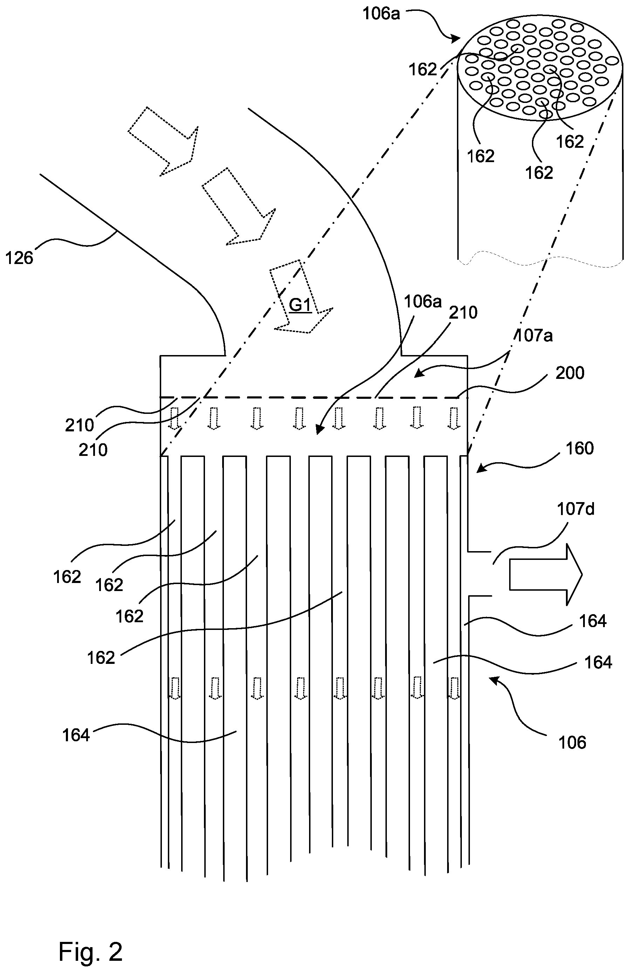

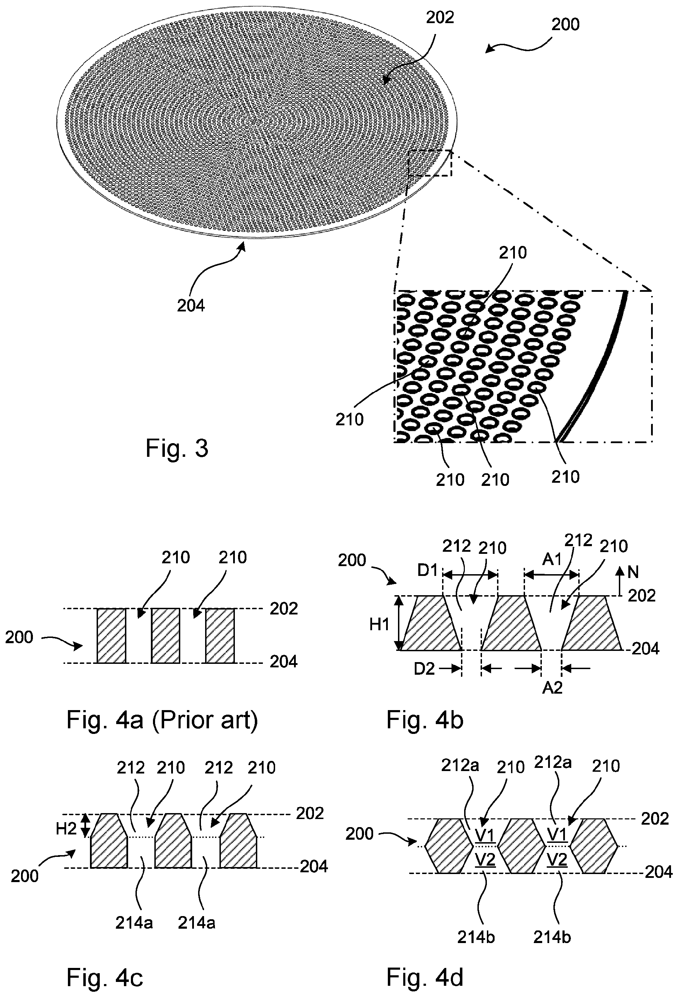

Initially, an overview of the system 10 will be given below. Followingly, the system 100 which forms part of the system 10 will be described in greater detail while also referring to Figs. 2 and 3 apart from Fig. 1.

The depicted system 10 comprises a direct heating device 102 and a heating device 128 for heating a liquid food, such as milk. During operation, the direct heating device 102 is configured to receive the liquid food via a product inlet line 101 and a stream of steam via a steam inlet line 103. The direct heating device 102 is configured to create a stream comprising a mixture of the liquid food and the steam, and as a consequence, increasing a temperature of the liquid food. The stream comprising the mixture of the liquid food and the steam is then fed via the heating device 128 which is configured to increase the temperature of the stream even further.

The system 100 comprises a product inlet pump 130 and a product inlet valve 131 which are configured to control a flow of the liquid food which is fed to the direct heating device 102. The system 100 comprises a steam inlet pump 132 and a steam inlet valve 133 configured to control a flow of the steam which is fed to the direct heating device 102.

As further depicted in Fig. 1, the stream is fed from the heating device 128 to a flash vessel 104 via a flash vessel pump 135. The flash vessel pump 135 is configured to control the flow of the stream entering into the flash vessel 104. That is, the flash vessel pump 135 is configured to control the flow of the heat-treated liquid food S1 entering into the flash vessel. The heat-treated liquid food S1 enters the flash vessel 104 via a flash vessel inlet 104a. The flash vessel forms part of the system 100 for cooling the heat-treated liquid food S1 being fed from the heating device 128.

In the flash vessel 104, the pressure of the stream of the heat-treated liquid food S1 decreases rapidly, and consequently the temperature of the heat-treated liquid food S1 decreases. As a result, the heat-treated liquid food S1 is rapidly cooled and flows toward the bottom of the flash vessel 104 in the form of a liquid stream L1 of the liquid food product. At the same time during the flash evaporation, a gaseous flow of steam G1 is formed. In other words, the flash vessel 104 is configured to receive, and flash evaporate the stream of the heat-treated liquid food S1 while forming a gaseous flow of steam G1 and a liquid stream L1 of the liquid food product. The liquid stream L1 of the liquid food product is then emptied from the flash vessel 104 via a bottom outlet 104c of the flash vessel 104.

The gaseous flow of steam G1 which typically comprises some parts of liquid food is drawn from the flash vessel 104, via an upper outlet 104b of the flash vessel 104, to a condenser 106. The condenser 106 is arranged downstream the flash vessel 104. The condenser is configured to condensate a major portion of the gaseous flow of steam G1 to form a condensate C1. The condenser 106 forms part of the system 100 for cooling the heat-treated liquid food S1. During production, the condenser 106 is used to condensate liquid comprised in the gaseous flow of steam G1 entering an inlet 107a of the condenser 106 via a pipe section 126. The pipe section 126 fluidly connects the upper flash vessel outlet 104b and the condenser 106 such that the gaseous flow of steam G1 may be drawn from the flash vessel 104 to the condenser 106. The condensate C1 which mainly comprises water emanating from the steam inlet line 103 is allowed to exit the condenser 106 via the outlet 107b thereof.

During operation, the flash vessel 104 and the condenser 106 are typically subjected to fouling of the liquid food. Also, the pipe section 126 is typically subjected to fouling of the liquid food. Such fouling may risk hampering the quality of the liquid food as well as reducing the capacity of e.g. the condenser 106. When a certain amount of fouling has accumulated in one or more locations of the system 100, operation will be paused and the system 100 will be cleaned. To this end, the depicted system 100 for colling the liquid food is provided with a cleaning system generally denoted 110 in Fig. 1. The depicted cleaning system 110 comprises a number of cleaning devices 108a-e arranged at desired locations of the system 100. As illustrated in Fig. 1, cleaning devices 108a-e in form of spray balls 108a-e are provided at five different locations of the system 100. As is known in the art, such spray balls 108a-e may be used for spray cleaning by spraying a cleaning solution onto the parts that are to be cleaned. Such cleaning solution may typically be fed to the spray balls 108a-e from a tank by means of a high-pressure pump of the cleaning system 110. The cleaning system 110 typically includes a set of valves such that the spray balls 108a-e may be activated as desired. Preferably, the cleaning solution is a liquid cleaning solution. The cleaning solution may comprise water and/or one or more cleaning agents.

Although cleaning of process equipment with spray balls 108a-e is generally effective, some locations may be difficult to clean sufficiently. In some instances, process equipment must be dismantled and cleaned although spray balls 108a-e are present. In such cases the operation will have to be paused for a prolonged period of time. Portions of the condenser 106 are generally difficult to clean by the spray balls 108a-e. It is therefore desired to design the condenser and its interior components in a way which minimizes fouling and consequently the downtime needed for cleaning the condenser.

The design and function of the condenser 106 will be described in greater detail below with refence to Figs. 2 and 3 as well as Fig. 1.

The condenser 106 may by way of example be a tube heat exchanger like the condenser 106 illustrated in Fig. 2. However, other types of condensers 106 or heat exchangers may be used in the system 100.

As illustrated in Fig. 2, the gaseous flow of steam G1 from the flash vessel 104 is received at the inlet 107a of the condenser 106 via the pipe section 126.

After having entered the inlet 107a of the condenser 106, the gaseous flow of steam G1 reaches a distribution plate 200 which is configured to distribute the gaseous flow of steam G1 over an inlet area 106a of the condenser 106a. To this end, the distribution plate 200 comprises a plurality of distribution openings 210, resulting in that the distribution plate 200 provides a pressure drop of about 10 mBar, resulting in an even distribution of the gaseous flow of steam G1 over the inlet area 106a of the condenser 106.

As illustrated in Fig. 2, the condenser 106 in form of a tube heat exchanger comprises a set of tubes 162 each configured to receive a respective portion of the gaseous flow of steam G1, as indicated by the hatched arrows in Fig. 2. To clearly show the general design of the condenser 106 at the inlet area 106a, a schematic simplified perspective view of the inlet area 106a and the respective tubes 162 is provided at the upper right portion of Fig. 2. In practice, the condenser 106 may have 10 to 460 number of tubes 162, preferably 10 to 60 number of tubes 162. Each tube 162 may have a diameter of about 25mm.

The tubes 162 of the condenser 106 are surrounded by one or more volumes 164 configured to receive a cooling media. To this end, the condenser 106 further comprises a cooling media inlet 107c and a cooling media outlet 107d. The cooling media inlet 107c is arranged in vicinity to the outlet 107b of the condenser and the cooling media outlet 107d is arranged in vicinity to the inlet 107a of the condenser. Preferably, the cooling media has a lower temperature when entering the condenser 106 via the cooling media inlet 107c compared to when leaving the condenser 106 via the cooling media outlet 107d. The system, 100 comprises a cooling media control valve 145 upstream the cooling media outlet 107d configured to control a cooling media flow leaving the condenser 106. The cooling media may be water or any other suitable cooling media. By the present design a major portion of the gaseous flow of steam G1 is condensed in the tubes 162 to form a condensate C1. The condensate C1 may then exit the condenser 106 via the outlet 107b. In practice, the condensate may be mainly water originating from the steam fed to the direct heating device 102 via the steam inlet line 103.

Now turning also to Fig. 3. Fig. 3 schematically illustrates the distribution plate 200 of Fig. 1. The distribution plate 200 comprises a plurality of distribution openings 210 extending between an inlet surface 202 and an outlet surface 204 of the distribution plate 200. The inlet surface 202 and the outlet surface 204 are as illustrated major surfaces of the distribution plate 200. In practice, the distribution plate 200 may have about 1000 distribution openings each having a diameter of about 5 mm, or about 3 to 8 mm. The distribution plate 200 may be formed from a sheet of stainless steel in which the distribution openings 210 are drilled. In this way, the distribution openings will have a uniform cross section and hence a uniform diameter as schematically illustrated in Fig. 4a. Fig. 4a schematically illustrates three distribution openings 210 of a uniform cross section formed in the distribution plate 200. As seen in Fig. 4a, the distribution openings 210 extend between the inlet surface 202 and the outlet surface 204 of the distribution plate 200.

As already indicated above, the present inventor has identified a potential problem with this structure of the distribution openings 210, in the form of significant accumulation of fouling inside the distribution openings 210 as well as on the inlet surface 202 and the outlet surface 204 of the distribution plate 200. The accumulated fouling impacts the performance of the distribution plate 200 and hence the system 100 negatively. This means that the fouling at the distribution plate 200 needs to be periodically removed by cleaning. In case the distribution plate 200 becomes too contaminated by fouling, even manual cleaning may be needed. Such manual cleaning is quite time consuming, since the condenser 106 needs to be dismantled and then reassembled. To reduce downtime of the UHT system 10, the condenser 106 may be replaced by an identical condenser 106 and cleaned off-line. However, the replacement operation is also quite time-consuming and results in downtime of the UHT system 10.

The present inventor has concluded that the fouling at the distribution plate 200 is mainly caused by an unfavorable flow of the gaseous flow of steam G1 through the distribution openings 210 of the distribution plate 200.

During extensive tests and simulations, the present inventor has concluded that the flow of the gaseous flow of steam G1 is uneven through the distribution openings 210. Moreover, the present inventor has concluded that as a result of the uneven distribution through the distribution openings 210, the gaseous flow of steam G1 is unevenly distributed between the distribution openings 210 of the distribution plate 200.

During said tests and simulations, the present inventor has concluded that the flow of the gaseous flow of steam G1, when accelerated through distribution openings 210 of a uniform cross-section, such as in Fig. 4a, will have a slow or even negative flow along the walls of the distribution openings 210. The present inventor has further concluded that such slow flow may result in that fouling in the distribution openings 210 is more likely to occur. The present inventor has furthermore concluded that a negative flow, i.e. a flow from the outlet surface 204 towards the inlet surface 202, may speed up fouling since particles may be carried back from the outlet surface 204 and into the distribution openings 210.

After significant experimentation, the present inventor has found a simple yet effective solution to this problem. The solution involves, as e.g. shown in Figs. 4b-4c, that the distribution openings 210 are provided with an inlet section 212, 212a which tapers as seen from the inlet surface 202 towards the outlet surface 204.

In this regard, it shall be noted that the distribution openings 210 may have any suitable shape and not just a circular shape as illustrated in Fig. 3. The distribution openings may for instance have a general oblong shape, a general oval shape, a general rectangular shape, a square shape, an elliptical shape, a wavy shape, a star shape to give a few non limiting examples. However, in the following, distribution openings 210 of a generally circular cross section will be described in greater detail although that the below described features or particulars of the distribution openings 210 may according to the present invention be implanted in distribution openings of an arbitrary cross-section.

Now turning to Fig. 4b. Fig. 4b schematically illustrates three distribution openings 210 of a distribution plate 200 of type the described above in conjunction with Fig. 3. Thus, the distribution plate 200 of Fig. 4b may like the distribution plate 200 of Fig. 3 comprise about 1000 distribution openings 210. It is currently believed that a distribution plate 200 in a commercial installation shall comprise 250 to 5000 distribution openings. The present inventor has found that the most satisfactory distribution of the gaseous flow of steam G1 over the inlet area 106a is achieved when the distribution plate 200 comprises 500 to 4800 distribution openings 210.

Although a distribution plate 200 typically comprises about 1000 distribution openings, Fig. 4b is intended to clearly illustrate how the distribution openings 210 may be formed according to an embodiment of the present invention. Hence, as clearly illustrated in Fig. 4b, each distribution opening 210 may taper as seen from the inlet surface 202 towards the outlet surface 204. In other words, each distribution opening 210 of Fig. 4b may have an inlet section 212 which tapers as seen from the inlet surface 202 towards the outlet surface 204. In Fig. 4b, the complete extent of the distribution openings tapers as seen from the inlet surface 202 towards the outlet surface 204 and may therefore be regarded as inlet sections 212.

Owing from the fact that the respective inlet sections 212 of the depicted distribution openings taper as seen from the inlet surface 202 towards the outlet surface 204, a maximum cross sectional area, indicated by "A1", of the inlet section 212 is larger than a minimum cross sectional area, indicated by "A2", of the inlet section 212. Although Fig. 4b merely illustrates a cross sectional view of three tapering distribution openings it is to be understood that the maximum cross sectional area A1 of the inlet section 212 is larger than the minimum cross sectional area A2 of the inlet section 212. In a commercial installation, the maximum cross sectional area A1 of the inlet section 212 is preferably at least 1,25 or at least 2 to 8 times the minimum cross sectional area A2 of the inlet section 212. This relation of the maximum cross sectional area A1 and the minimum cross sectional area A2 of the inlet section 212 is currently believed to counteract fouling in the distribution openings 210 in an efficient way by significantly counteracting slow or negative flows of the gaseous flow of steam G1 through the distribution openings 210.

Distribution openings 210 of the type illustrated in Fig. 4b may be formed by drilling holes using a conical drill bit. Alternatively, a circular hole may be drilled and subsequently chamfered throughout its depth, i.e. from the inlet surface 202 to the outlet surface 204.

Now turning to Fig. 4c. Fig. 4c schematically illustrates three distribution openings 210 of a distribution plate 200. Fig. 4c is intended to clearly illustrate how the distribution openings 210 may be formed according to an embodiment of the present invention. Hence, as clearly illustrated in Fig. 4c, each distribution opening may comprise an inlet section 212 which tapers as seen from the inlet surface 202 towards the outlet surface 204. Further, each distribution opening 210 may comprise an outlet section 214a of a uniform cross section. Further, as illustrated in Fig. 4c, the outlet section 214a may adjoin the inlet section 212. In other words, the outlet section 214a of the uniform cross section may follow directly after the tapering inlet section 212 as seen from the inlet surface 202 towards the outlet surface 204.

Distribution openings 210 of the type illustrated in Fig. 4c may be provided by first drilling holes of a uniform cross section using a standard drill bit, and subsequently using a conical drill bit or countersinking tool to form the tapering inlet section 212. Hence, in this way, the outlet section 214a of uniform cross section may be formed when drilling holes with a standard drill bit, while the inlet section 212 may be subsequently formed in a different manufacturing step. Thus, the distribution openings 210 may be circular openings in which each inlet section 212 is formed by a countersunk inlet section 212a.

Alternatively, a special purpose drill bit having a straight portion followed by a conical portion may be used to produce distribution openings of the type illustrated in Fig. 4c in a single manufacturing step.

The present inventor has found room for further improvement of the distribution plates 200 of Figs. 4b and 4c. By providing the distribution openings 210 with an outlet section 214b which expands as seen from the inlet surface 202 towards the outlet surface 204 the amount of fouling accumulated in the distribution openings may be further reduced. After further significant experimentation, the present inventor has found that an outlet section 214b which expands as seen from the inlet surface 202 towards the outlet surface 204 may result in a more favorable flow of the gaseous flow of steam G1 through the distribution openings 210 such that even less fouling is accumulated in the distribution openings 210. It is currently believed that that an outlet section 214b which expands as seen from the inlet surface 202 towards the outlet surface 204 may even more counteract fouling in the distribution openings 210 by even further counteracting slow or negative flows of the gaseous flow of steam G1 through the distribution openings 210.

Now turning to Fig. 4d. Fig. 4d schematically illustrates three distribution openings 210 of a distribution plate 200. Fig. 4d is intended to clearly illustrate how the distribution openings 210 may be formed according to an embodiment of the present invention. Hence, as clearly illustrated in Fig. 4d, each distribution opening may comprise an inlet section 212a which tapers as seen from the inlet surface 202 towards the outlet surface 204. Further, each distribution opening 210 may comprise an outlet section 214b which expands as seen from the inlet surface 202 towards the outlet surface 204.

Further, as illustrated in Fig. 4d, the outlet section 214b may adjoin the inlet section 212a. In other words, the outlet section 214b which expands as seen from the inlet surface 202 towards the outlet surface 204 may follow directly after the tapering inlet section 212a as seen from the inlet surface 202 towards the outlet surface 204.

Distribution openings 210 of the type illustrated in Fig. 4d may be formed by drilling holes using a conical drill bit from the inlet surface 202 or from the outlet surface 204 of the distribution plate 200 and subsequently expanding the holes from the opposite major surface, using the conical drill bit or a countersinking tool. Thus, the distribution openings 210 may be circular openings in which each inlet section 212 is formed by a countersunk inlet section 212a. Thus, the distribution openings 210 may be circular openings in which each outlet section 214b is formed by a countersunk outlet section 214b.

As illustrated in Fig. 4d, such countersunk inlet section 212a may meet a countersunk outlet section 214b. In this way each distribution opening 210 may be defined by a respective pair of communicating frustoconical volumes V1, V2.

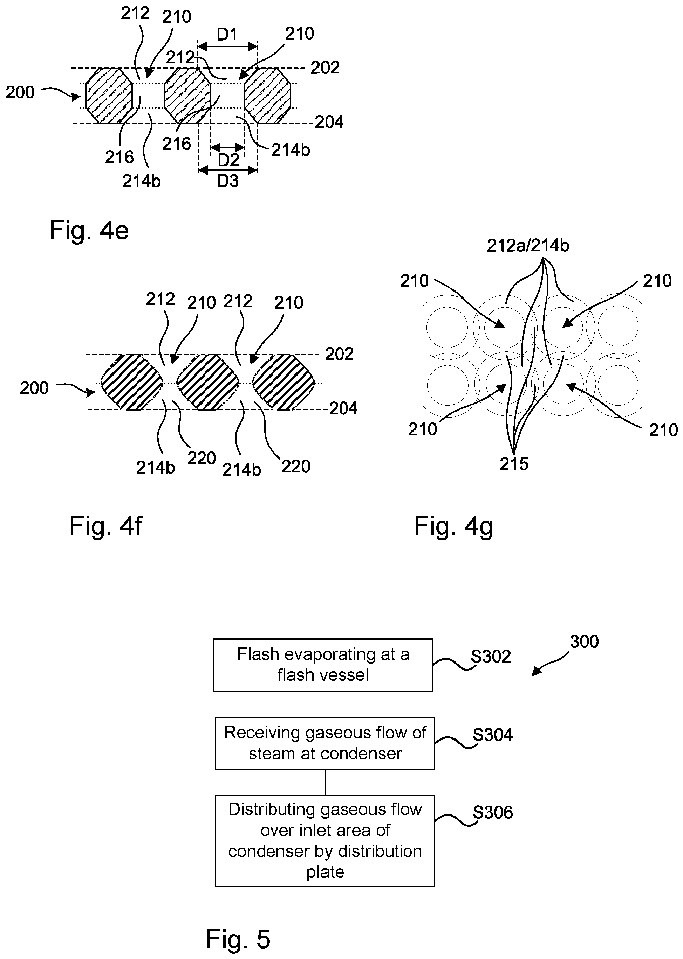

Now turning to Fig. 4e. Fig. 4e schematically illustrates three distribution openings 210 of a distribution plate 200. Fig. 4e is intended to clearly illustrate how the distribution openings 210 may be formed according to an embodiment of the present invention. Hence, as clearly illustrated in Fig. 4e, each distribution opening may comprise an inlet section 212 which tapers as seen from the inlet surface 202 towards the outlet surface 204. Further, each distribution opening 210 may comprise an outlet section 214b which expands as seen from the inlet surface 202 towards the outlet surface 204. Further, the inlet section 212 and the outlet section 214b may be joined via an intermediate section 216 of a uniform cross section as illustrated in Fig 4e. In this way, a favorable flow of the gaseous flow of steam G1 through the distribution openings 210 may be realized also for instance when a thicker material sheet is used for the distribution plate 200, this without complicating the fabrication of the distribution openings notably.

As illustrated in Fig. 4b and 4e, the inlet section 212 tapers from a first diameter D1 at the inlet surface 202 to a second diameter D2 at its end. Thus, the first diameter D1 is a maximum diameter of the inlet section 212 whereas the second diameter D2 is a minimum diameter of the inlet section 212. The first diameter D1 may be 10 to 15 mm. The second diameter D2 may be 4 to 8 mm. A height H1 of the distribution openings 210 may be 2 to 10 mm. The height H1 may be defined as the distance from largest to the smallest portion of the inlet section 212, as seen in a direction that is parallel to a normal direction N of the distribution plate 200. The height may be the same as the thickness of the distribution plage 200, as illustrated by the height H1 in Fig. 4b, or may be smaller than the thickness of the distribution plate, as illustrated by the height H2 in Fig. 4c.

After the inlet section 212, the depicted distribution openings 210 proceeds with an intermediate section 216 of a uniform cross section having the second diameter D2. That is, the intermediate section 216 of a uniform cross section has a diameter D2 which corresponds to the minimum diameter of the inlet section 212. After the intermediate section 216 of a uniform cross section, the depicted distribution openings 210 proceeds with an outlet section 214b which adjoins the intermediate section 216 and which expands as seen from the inlet surface 202 towards the outlet surface 204. Thus, the outlet section 214b has a minimum diameter D2 which corresponds to the diameter D2 of the intermediate section and to the minimum diameter D2 of the inlet section 212. As illustrated in Fig. 4e, the outlet section 214b expands to a maximum diameter D3 at the outlet surface 204.

In a commercial installation, having distribution openings of the type described above and illustrated in Fig. 4e, the diameter D1 at the inlet surface 202 and the diameter D3 at the outlet surface 204 are preferably at least 1,25, or 2- 8, times diameter D2 at the intermediate section 216. This relation of the diameters R1, R2, R3 is currently believed to counteract fouling in the distribution openings 210 in an efficient way by significantly counteracting slow or negative flows of the gaseous flow of steam G1 through the distribution openings 210.

Distribution openings 210 of the type illustrated in Fig. 4e may be provided by first drilling holes of a uniform cross section using a standard drill bit, and subsequently using a conical drill bit or countersinking tool to form the tapering inlet section 212 and the expanding outlet section 214b. Hence, in this way, the intermediate section 216 of uniform cross section may be formed when drilling holes with a standard drill bit, while the inlet section 212 and the outlet section 214b may be subsequently formed in respective different manufacturing steps. Thus, the distribution openings 210 may be circular openings in which each inlet section 212 is formed by a countersunk inlet section 212a and each outlet section 214b is formed by a countersunk outlet section 214b.

Now turning to Fig. 4f. Fig. 4f schematically illustrates three distribution openings 210 of a distribution plate 200. Fig. 4f is intended to clearly illustrate how the distribution openings 210 may be formed according to an embodiment of the present invention. Hence, as clearly illustrated in Fig. 4f, each distribution opening may comprise a respective inlet section 212 which tapers as seen from the inlet surface 202 towards the outlet surface 204 and a respective outlet section 214b which expands as seen from the inlet surface 202 towards the outlet surface 204. As illustrated in Fig. 4f, the inlet section 212 tapers in a non-liner fashion and the outlet section 214b expands in a non-liner fashion. More specifically, the distribution openings 210 of Fig. 4f are defined by a bounding surface 220 in the shape of a hyperboloid of one sheet. In this way, a smooth transition between the inlet section 212 and the outlet section 214b may be realized.

Such smoot transition between the inlet section 212 and the outlet section 214b is currently believed to be favorable since it is less prone to generating turbulence in the gaseous flow of steam G1 as compared to a sharper transition as e.g. illustrated in 4d, where the inlet section 212 tapers in a liner fashion and the outlet section 214b expands in a liner fashion. Thus, the present inventor has realized that such smoot transition may counteract fouling in the distribution openings 210 in an efficient way by even further counteracting slow or negative flows of the gaseous flow of steam G1 through the distribution openings 210.

Now turning to Fig. 4g. Fig. 4g schematically illustrates a planar view of eight distribution openings 210. That is, Fig. 4g may be said to illustrate the distribution openings from the inlet surface 202 of a distribution plate 200. However, 4g may equally well be said to illustrate the distribution openings from the outlet surface 204 of a distribution plate 200.

Irrespective of Fig. 4g is said to illustrate the distribution openings 210 from the inlet surface 202 of a distribution plate 200 or from the outlet surface 204 of the distribution plate 200, each distribution opening 210 is circular and has a countersunk portion either in form of an inlet section 212a or in form of outlet section 214b. In the following, the countersunk portion in form of an inlet section 212a or in form of outlet section 214b will for reasons of brevity be described as a countersunk inlet section 212a, i.e. an inlet section which tapers as seen from the inlet surface 202 towards the outlet surface 204, although the following description is equally valid for an outlet section 214b which expands as seen from the inlet surface 202 towards the outlet surface 204. As illustrated in Fig. 4g, each countersunk inlet section 212a overlaps one or more countersunk inlet sections 212a of neighboring distribution openings 210. The area of overlap 215 of the respective countersunk inlet sections 212a are clearly indicated in Fig. 4g. In practice, an area of overlap 215 may correspond to 2-15 % of an area of a countersunk inlet section 212a. It is currently believed that an area of overlap 215 which correspond to 2-15 % of an area of a countersunk inlet section 212a may even more counteract fouling in the distribution openings 210 by even further counteracting slow or negative flows of the gaseous flow of steam G1 through the distribution openings 210.

In the above, many variations to the design of the distribution openings 210 have been described with reference to Figs. 4b-4g. Although the distribution openings of Figs. 4b-4g have different designs, the various distribution openings 210 are to advantage of approximately the same size. The present inventor has realized that an advantageous flow of the gaseous flow of steam G1 through the distribution openings 210 as well as a satisfactory distribution of the gaseous flow of steam G1 over the inlet area 106a of the condenser 106 may be achieved when a minimum cross-sectional area of each one of the plurality of distribution openings 210 lies in a range of 3-80 mm².

However, it is currently believed that an optimum in terms of the gaseous flow of steam G1 through the distribution openings 210 as well as the distribution of the gaseous flow of steam G1 over the inlet area 106a of the condenser 106 may be achieved when a minimum cross-sectional area of each one of the plurality of distribution openings 210 lies in a range of 12-50 mm².

Further, the present inventor has realized that an advantageous flow of the gaseous flow of steam G1 through the distribution openings 210 as well as a satisfactory distribution of the gaseous flow of steam G1 over the inlet area 106a of the condenser 106 may be achieved when the total cross-sectional area of the plurality of distribution openings 210 corresponds to 50-80%, preferably 55-75%, of a cross-sectional area of the inlet surface 202.

However, it is currently believed that an optimum in terms of the gaseous flow of steam G1 through the distribution openings 210 as well as the distribution of the gaseous flow of steam G1 over the inlet area 106a of the condenser 106 may be achieved when a total cross-sectional area of the plurality of distribution openings 210 corresponds to 62-67% of a cross-sectional area of the inlet surface 202.

It is further to be understood that the material of the distribution plate 200 may vary. In the above, the distribution plate has been described as being formed of a sheet of stainless steel. It is however conceivable to form the distribution plate 200 form other materials, such as aluminum, plastics or ceramics.

Also, the thickness of the distribution plate may be varied. Feasible thicknesses of the distribution plate are typically between 2 and 3 mm, or between 1 mm and 10 mm.

Now turning to Fig. 5. Fig. A method 300 of cooling heat-treated liquid food S1 will be described. The method 300 may be used in a system 100 for cooling heat-treated liquid food S1 as described above in conjunction with Figs. 1-3 and 4b-4g. Thus, by the below method 300, the downtime needed for cleaning the system 100 may be significantly reduced.

The method 300 comprises flash evaporating S302, at a flash vessel 104, the heat-treated liquid food S1 to form a gaseous flow of steam G1 and a liquid stream L1 of the liquid food product.

The method 300 proceeds by, receiving S304, at an inlet 107a of a condenser 106 arranged downstream the flash vessel 104 and being configured to condensate a major portion of the gaseous flow of steam G1 to form a condensate C1, the gaseous flow of steam G1 from the flash vessel 104.

The method 300 proceeds by, distributing S306, by a distribution plate 200 provided at the inlet 107a of the condenser 106, the gaseous flow of steam G1 over an inlet area 106a of the condenser 106. The distribution plate 200 comprises a plurality of distribution openings 210 extending between an inlet surface 202 and an outlet surface 204 thereof. A majority of the plurality of distribution openings 210 comprises an inlet section 212, 212a which tapers as seen from the inlet surface 202 towards the outlet surface 204.

From the description above follows that, although various embodiments of the invention have been described and shown, the invention is not restricted thereto, but may also be embodied in other ways within the scope of the subject-matter defined in the following claims.

## Claims

1. A system (100) for cooling heat-treated liquid food (S1), the system (100) comprising:
a flash vessel (104) configured to receive, and flash evaporate the heat-treated liquid food (S1) to form a gaseous flow of steam (G1) and a liquid stream (L1) of the liquid food product, and
a condenser (106) arranged downstream the flash vessel (104), the condenser (106) being configured to receive the gaseous flow of steam (G1) from the flash vessel (104), and to condensate a major portion of the gaseous flow of steam (G1) to form a condensate (C1), the system being **characterized by**
an inlet (107a) of the condenser (106) being provided with a distribution plate (200) configured to distribute the gaseous flow of steam (G1) over an inlet area (106a) of the condenser (106), and
the distribution plate (200) comprising a plurality of distribution openings (210) extending between an inlet surface (202) and an outlet surface (204) of the distribution plate (200),
**wherein** a majority of the plurality of distribution openings (210) comprises a respective inlet section (212, 212a) which tapers as seen from the inlet surface (202) towards the outlet surface (204).

2. The system (100) according to claim 1, wherein a maximum cross sectional area (A1) of the inlet section (212) is at least 1,25 times a minimum cross sectional area (A2) of the inlet section (212).

3. The system (100) according to claim 1 or 2, wherein said majority of the plurality of distribution openings (210) comprises a respective outlet section (214a) of a uniform cross section, the outlet section (214a) adjoining the inlet section (212).

4. The system (100) according to claim 1 or 2, wherein said majority of the plurality of distribution openings (210) comprises an outlet section (214b) which expands as seen from the inlet surface (202) towards the outlet surface (204).

5. The system (100) according to claim 4, wherein the inlet section (212) adjoins the outlet section (214b).

6. The system (100) according to claim 4, wherein the inlet section (212) and the outlet section (214b) are joined via an intermediate section (216) of a uniform cross section.

7. The system (100) according to any one of the preceding claims, wherein said plurality of distribution openings (210) are circular openings, and wherein each inlet section (212) is formed by a countersunk inlet section (212a).

8. The system (100) according to any one of claims 4-7, wherein said plurality of distribution openings (210) are circular openings, and wherein each outlet section (214b) is formed by a countersunk outlet section (214b).

9. The system (100) according to claim 7, wherein each countersunk inlet section (212a) overlaps one or more countersunk inlet sections (212a) of neighboring distribution openings (210).

10. The system (100) according to claim 8 when dependent on claim 7, wherein the countersunk inlet section (212a) meets the countersunk outlet section (214b) such that said plurality of distribution openings (210) are defined by a respective pair of communicating frustoconical volumes (V1, V2).

11. The system (100) according to any one of the preceding claims, wherein a minimum cross-sectional area of each one of the plurality of distribution openings (210) lies in a range of 3-80 mm², preferably in a range of 12-50 mm².

12. The system (100) according to any one of the preceding claims, wherein a total cross-sectional area of the plurality of distribution openings (210) corresponds to 50-80%, preferably 55-75%, more preferably 62-67%, of a cross-sectional area of the inlet surface (202).

13. The system (100) according to any one of the preceding claims, wherein the condenser (106) comprises a tube heat exchanger (160) comprising a plurality of tubes (162) extending from the inlet area (106a) and configured to receive the gaseous flow of steam (G1) from the distribution plate (200), wherein the distribution plate (200) is configured to distribute the gaseous flow of steam evenly between the tubes (162).

14. The system (100) according to claim 13, wherein the distribution plate (200) comprises 100 to 6000 distribution openings (210), preferably 250 to 5000 distribution openings (210), and wherein the tube heat exchanger (160) comprises 10 to 600 tubes (162), preferably 40 to 460 tubes (162).

15. A method (300) of cooling heat-treated liquid food (S1), the method (300) comprising:
flash evaporating (S302), at a flash vessel (104), the heat-treated liquid food (S1) to form a gaseous flow of steam (G1) and a liquid stream (L1) of the liquid food product,
receiving (S304), at an inlet (107a) of a condenser (106) arranged downstream the flash vessel (104) and being configured to condensate a major portion of the gaseous flow of steam (G1) to form a condensate (C1), the gaseous flow of steam (G1) from the flash vessel (104), and
distributing (S306), by a distribution plate (200) provided at the inlet (107a) of the condenser (106), the gaseous flow of steam (G1) over an inlet area (106a) of the condenser (106), the distribution plate (200) comprising a plurality of distribution openings (210) extending between an inlet surface (202) and an outlet surface (204) thereof, wherein a majority of the plurality of distribution openings (210) comprises an inlet section (212, 212a) which tapers as seen from the inlet surface (202) towards the outlet surface (204).

## Patentansprüche

1. System (100) zum Kühlen wärmebehandelter flüssiger Lebensmittel (S1), wobei das System (100) Folgendes umfasst:
einen Entspannungsbehälter (104), der dazu ausgelegt ist, das wärmebehandelte flüssige Lebensmittel (S1) aufzunehmen und zu verdampfen, um einen gasförmigen Dampfstrom (G1) und einen flüssigen Strom (L1) des flüssigen Lebensmittelprodukts auszubilden, und
einen Kondensator (106), der dem Entspannungsbehälter (104) nachgelagert angeordnet ist, wobei der Kondensator (106) dazu ausgelegt ist, den gasförmigen Dampfstrom (G1) aus dem Entspannungsbehälter (104) aufzunehmen und einen Großteil des gasförmigen Dampfstroms (G1) zu kondensieren, um ein Kondensat (C1) auszubilden, wobei das System **dadurch gekennzeichnet ist, dass** ein Einlass (107a) des Kondensators (106) mit einer Verteilerplatte (200) versehen ist, die dazu ausgelegt ist, den gasförmigen Dampfstrom (G1) über einen Einlassbereich (106a) des Kondensators (106) zu verteilen, und
wobei die Verteilerplatte (200) mehrere Verteileröffnungen (210) umfasst, die sich zwischen einer Einlassfläche (202) und einer Auslassfläche (204) der Verteilerplatte (200) erstrecken,
wobei ein Großteil der mehreren Verteileröffnungen (210) einen jeweiligen Einlassabschnitt (212, 212a) umfasst, der sich, von der Einlassfläche (202) aus gesehen, zur Auslassfläche (204) hin verjüngt.

2. System (100) nach Anspruch 1, wobei eine maximale Querschnittsfläche (A1) des Einlassabschnitts (212) mindestens das 1,25-Fache einer minimalen Querschnittsfläche (A2) des Einlassabschnitts (212) beträgt.

3. System (100) nach Anspruch 1 oder 2, wobei der Großteil der mehreren Verteileröffnungen (210) einen jeweiligen Auslassabschnitt (214a) mit einem einheitlichen Querschnitt umfasst, wobei der Auslassabschnitt (214a) an den Einlassabschnitt (212) angrenzt.

4. System (100) nach Anspruch 1 oder 2, wobei der Großteil der mehreren Verteileröffnungen (210) einen Auslassabschnitt (214b) umfasst, der sich, von der Einlassfläche (202) aus gesehen, zur Auslassfläche (204) hin ausdehnt.

5. System (100) nach Anspruch 4, wobei der Einlassabschnitt (212) an den Auslassabschnitt (214b) angrenzt.

6. System (100) nach Anspruch 4, wobei der Einlassabschnitt (212) und der Auslassabschnitt (214b) über einen Zwischenabschnitt (216) mit einem einheitlichen Querschnitt verbunden sind.

7. System (100) nach einem der vorhergehenden Ansprüche, wobei die mehreren Verteileröffnungen (210) kreisförmige Öffnungen sind und wobei jeder Einlassabschnitt (212) durch einen versenkten Einlassabschnitt (212a) ausgebildet ist.

8. System (100) nach einem der Ansprüche 4-7, wobei die mehreren Verteileröffnungen (210) kreisförmige Öffnungen sind und wobei jeder Auslassabschnitt (214b) durch einen versenkten Auslassabschnitt (214b) ausgebildet ist.

9. System (100) nach Anspruch 7, wobei jeder versenkte Einlassabschnitt (212a) einen oder mehrere versenkte Einlassabschnitte (212a) benachbarter Verteileröffnungen (210) überlagert.

10. System (100) nach Anspruch 8, wenn abhängig von Anspruch 7, wobei der versenkte Einlassabschnitt (212a) auf den versenkten Auslassabschnitt (214b) trifft, so dass die mehreren Verteileröffnungen (210) durch ein jeweiliges Paar von kommunizierenden kegelstumpfförmigen Volumina (V1, V2) definiert sind.

11. System (100) nach einem der vorhergehenden Ansprüche, wobei eine minimale Querschnittsfläche jeder der mehreren Verteileröffnungen (210) in einem Bereich von 3-80 mm², vorzugsweise in einem Bereich von 12-50 mm², liegt.

12. System (100) nach einem der vorhergehenden Ansprüche, wobei eine Gesamtquerschnittsfläche der mehreren Verteileröffnungen (210) 50-80 %, vorzugsweise 55-75 %, weiter bevorzugt 62-67 %, einer Querschnittsfläche der Einlassfläche (202) entspricht.

13. System (100) nach einem der vorhergehenden Ansprüche, wobei der Kondensator (106) einen Rohrwärmetauscher (160) umfasst, der mehrere Rohre (162) umfasst, die sich vom Einlassbereich (106a) erstrecken und dazu ausgelegt sind, den gasförmigen Dampfstrom (G1) von der Verteilerplatte (200) aufzunehmen, wobei die Verteilerplatte (200) dazu ausgelegt ist, den gasförmigen Dampfstrom gleichmäßig zwischen den Rohren (162) zu verteilen.

14. System (100) nach Anspruch 13, wobei die Verteilerplatte (200) 100 bis 6000 Verteileröffnungen (210), vorzugsweise 250 bis 5000 Verteileröffnungen (210), umfasst und wobei der Rohrwärmetauscher (160) 10 bis 600 Rohre (162), vorzugsweise 40 bis 460 Rohre (162), umfasst.

15. Verfahren (300) zum Kühlen wärmebehandelter flüssiger Lebensmittel (S1), wobei das Verfahren (300) Folgendes umfasst:
Entspannungsverdampfen (S302) des wärmebehandelten flüssigen Lebensmittels (S1) in einem Entspannungsbehälter (104), um einen gasförmigen Dampfstrom (G1) und einen flüssigen Strom (L1) des flüssigen Lebensmittelprodukts auszubilden,
Aufnehmen (S304) des gasförmigen Dampfstroms (G1) aus dem Entspannungsbehälter (104) an einem Einlass (107a) eines Kondensators (106), der dem Entspannungsbehälter (104) nachgelagert angeordnet und dazu ausgelegt ist, einen Großteil des gasförmigen Dampfstroms (G1) zu kondensieren, um ein Kondensat (C1) auszubilden, und Verteilen (S306) des gasförmigen Dampfstroms (G1) über einen Einlassbereich (106a) des Kondensators (106) durch eine Verteilerplatte (200), die am Einlass (107) des Kondensators (106) vorgesehen ist, wobei die Verteilerplatte (200) mehrere Verteileröffnungen (210) umfasst, die sich zwischen einer Einlassfläche (202) und einer Auslassfläche (204) davon erstrecken, wobei ein Großteil der mehreren Verteileröffnungen (210) einen Einlassabschnitt (212, 212a) umfasst, der sich, von der Einlassfläche (202) aus gesehen, zur Auslassfläche (204) hin verjüngt.

## Revendications

1. Système (100) pour refroidir un aliment liquide thermotraité (S1), le système (100) comprenant :
un ballon de détente (104) configuré pour recevoir, et évaporer à détente l'aliment liquide thermotraité (S1) pour former un écoulement gazeux de vapeur (G1) et un courant de liquide (L1) du produit alimentaire liquide, et
un condenseur (106) agencé en aval du ballon de détente (104), le condenseur (106) étant configuré pour recevoir l'écoulement gazeux de vapeur (G1) en provenance du ballon de détente (104), et pour condenser une partie principale de l'écoulement gazeux de vapeur (G1) pour former un condensat (C1), le système étant **caractérisé en ce qu'**une entrée (107a) du condenseur (106) est pourvue d'une plaque de distribution (200) configurée pour distribuer l'écoulement gazeux de vapeur (G1) par-dessus une superficie d'entrée (106a) du condenseur (106), et
la plaque de distribution (200) comprend une pluralité d'ouvertures de distribution (210) s'étendant entre une surface d'entrée (202) et une surface de sortie (204) de la plaque de distribution (200),
dans lequel une majorité de la pluralité d'ouvertures de distribution (210) comprend une section d'entrée respective (212, 212a) qui s'effile en vue depuis la surface d'entrée (202) vers la surface de sortie (204).

2. Système (100) selon la revendication 1, dans lequel une superficie de section transversale maximum (A1) de la section d'entrée (212) est au moins 1,25 fois une superficie de section transversale minimum (A2) de la section d'entrée (212).

3. Système (100) selon la revendication 1 ou 2, dans lequel ladite majorité de la pluralité d'ouvertures de distribution (210) comprend une section de sortie respective (214a) d'une section transversale uniforme, la section de sortie (214a) étant contiguë à la section d'entrée (212).

4. Système (100) selon la revendication 1 ou 2, dans lequel ladite majorité de la pluralité d'ouvertures de distribution (210) comprend une section de sortie (214b) qui s'agrandit en vue depuis la surface d'entrée (202) vers la surface de sortie (204).

5. Système (100) selon la revendication 4, dans lequel la section d'entrée (212) est contiguë à la section de sortie (214b).

6. Système (100) selon la revendication 4, dans lequel la section d'entrée (212) et la section de sortie (214b) sont jointes par l'intermédiaire d'une section intermédiaire (216) d'une section transversale uniforme.

7. Système (100) selon l'une quelconque des revendications précédentes, dans lequel ladite pluralité d'ouvertures de distribution (210) sont des ouvertures circulaires, et dans lequel chaque section d'entrée (212) est formée par une section d'entrée évasée (212a).

8. Système (100) selon l'une quelconque des revendications 4 à 7, dans lequel ladite pluralité d'ouvertures de distribution (210) sont des ouvertures circulaires, et dans lequel chaque section de sortie (214b) est formée par une section de sortie évasée (214b).

9. Système (100) selon la revendication 7, dans lequel chaque section d'entrée évasée (212a) chevauche une ou plusieurs sections d'entrée évasées (212a) d'ouvertures de distribution voisines (210).

10. Système (100) selon la revendication 8 lorsqu'elle dépend de la revendication 7, dans lequel la section d'entrée évasée (212a) rejoint la section de sortie évasée (214b) de manière telle que ladite pluralité d'ouvertures de distribution (210) sont définies par une paire respective de volumes tronconiques en communication (V1, V2).

11. Système (100) selon l'une quelconque des revendications précédentes, dans lequel une superficie de section transversale minimum de chacune de la pluralité d'ouvertures de distribution (210) se trouve dans une plage de 3 à 80 mm², de préférence dans une plage de 12 à 50 mm².

12. Système (100) selon l'une quelconque des revendications précédentes, dans lequel une superficie de section transversale totale de la pluralité d'ouvertures de distribution (210) correspond à 50 à 80 %, de préférence à 55 à 75 %, mieux encore de 62 à 67 %, d'une superficie de section transversale de la surface d'entrée (202).

13. Système (100) selon l'une quelconque des revendications précédentes, dans lequel le condenseur (106) comprend un échangeur de chaleur à tubes (160) comprenant une pluralité de tubes (162) s'étendant depuis la superficie d'entrée (106a) et configurés pour recevoir l'écoulement gazeux de vapeur (G1) en provenance de la plaque de distribution (200), dans lequel la plaque de distribution (200) est configuré pour distribuer l'écoulement gazeux de vapeur uniformément entre les tubes (162).

14. Système (100) selon la revendication 13, dans lequel la plaque de distribution (200) comprend de 100 à 6 000 ouvertures de distribution (210), de préférence de 250 à 5 000 ouvertures de distribution (210), et dans lequel l'échangeur de chaleur à tubes (160) comprend de 10 à 600 tubes (162), de préférence de 40 à 460 tubes (162).

15. Procédé (300) de refroidissement d'aliment liquide thermotraité (S1), le procédé (300) comprenant :
l'évaporation à détente (S302), au niveau d'un ballon de détente (104), de l'aliment liquide thermotraité (S1) pour former un écoulement gazeux de vapeur (G1) et un courant de liquide (L1) du produit alimentaire liquide, la réception (S304), au niveau d'une entrée (107a) d'un condenseur (106) agencé en aval du ballon de détente (104) et configuré pour condenser une partie principale de l'écoulement gazeux de vapeur (G1) pour former un condensat (C1), de l'écoulement gazeux de vapeur (G1) en provenance du ballon de détente (104), et la distribution (S306), par une plaque de distribution (200) prévue au niveau de l'entrée (107a) du condenseur (106), de l'écoulement gazeux de vapeur (G1) par-dessus une superficie d'entrée (106a) du condenseur (106), la plaque de distribution (200) comprenant une pluralité d'ouvertures de distribution (210) s'étendant entre une surface d'entrée (202) et une surface de sortie (204) de celle-ci, dans lequel une majorité de la pluralité d'ouvertures de distribution (210) comprend une section d'entrée (212, 212a) qui s'effile en vue depuis la surface d'entrée (202) vers la surface de sortie (204).
